# EUROPEAN PATENT APPLICATION

(11) **EP 1 284 513 A1**
(43) Date of publication of application: **19.02.2003**
(21) Application number: 02078314.8
(22) Date of filing: 01.07.1999
(51) Int. Cl.: H01M 8/02, H01M 8/24, C25B 15/08, C25B 11/03

(54) **Porous mat electrodes for electrochemical reactor having electrolyte solution distribution channels**

(62) Divisional of application: 99929700.5
(71) Applicant: Squirrel Holdings Ltd., George Town, Grand Cayman (KY)
(72) Inventor: Broman, Barry Michael, Kirkland, Washington 98033 (US); Zocchi, Andrea, 50125 Firenze (IT)
(74) Representative: Pellegri, Alberto

(57) **Abstract**

A multicell assembly is constituted by alternately stacking two types of preassembled elements: an electrode subassembly including porous mat electrodes on opposite faces of a conductive plate and a membrane subassembly.

Two interleaved orders of parallel flow channels are defined in the porous mat electrodes to minimize pressure drops. All the parallel spaced channels of each order extend from a common orthogonal base channel formed along the respective inlet or outlet side of the electrolyte flow chamber and terminate short of reaching the base channel of the other order. Each order defines a comb-shaped flow distributing channelwork the parallel fingers of which interleave with the finger channels of the other order.

## Description

### 1. FIELD OF THE INVENTION

This invention relates to electrochemical reactors for conducting reduction and oxidation reactions in respective positive and negative liquid electrolytes, without gas evolution at the electrodes. More specifically the invention relates to a membrane-separated, multicell electrochemical reactor for implementing a redox flow battery system.

### 2. DESCRIPTION OF RELATED ART

Redox flow battery systems are increasingly attracting interest as efficient energy conversion systems. Among redox couple candidates, the all vanadium redox system being one of the most preferred.

Structurally, the electrochemical reactors that have been proposed for redox flow battery systems, have been derived from the electrochemical reactor structures developed for general electrolysis processes, the only adaptation having concerned the materials employed as electrodes.

Generally, the electrochemical reactors used as redox batteries are composed of a stack of electrode elements separated by ion exchange membranes, defining a positive electrolyte flow chamber on one side of each membrane and a negative electrolyte flow chamber on the opposite side thereof. The stack of component elements is assembled together in a filter-pass arrangement between two end electrode elements.

The document US-A-4,886,586 discloses a frame assembly for ion exchange membrane consisting of two frames holding the membrane therebetween. The assembly is realizably fastened by means of separate screws screwed through a counterflange, the membrane and the inner flange of the frame.

Commonly, The elements have a frame provided with co-ordinated through holes forming inlet and outlet manifolds for the two electrolytes that are circulated in a parallel mode through the positive electrolyte flow chambers and the negative electrolyte flow chambers, respectively.

Traditionally the elements are mounted and operated in a vertical position.

A redox system requires nonnegligible electrolyte flow rates through the flow chambers of the reactor in order to maintain optimal half-cell reactions conditions at the electrodes.

A membrane-separated multicell electrochemical reactor for half-cell reduction and oxidation reactions in respective positive and negative electrolytes, without gas evolution, may have an architecture that makes it more easily assemblable by allowing to stack fully pre-assembled elements horizontally, one on top of the other, and suitable to be operated in the same horizontal orientation of the bipolar elements.

The multicell assembly may be constituted by alternately stacking two types of pre-assembled elements, one may be a bipolar electrode subassembly and the other a membrane subassembly.

Of course, the alternate stack of elements is piled over a bottom end element and the stack is terminated by placing over the last membrane element a top end electrode element. The two end electrode elements are then compressed on the stack by tightening a plurality of tie rods, conventionally arranged around the perimeter of the stacked elements, according to a common practice in tightening a filter-press stack in a hydraulically sealed manner, by virtue of the gaskets operatively installed between the coupling faces of the frames of the stacked elements.

According to the architecture described in the parent European Patent application No. 99929700.5, of which the present is a divisional application, each electrode element and each ion exchange membrane separator element includes a substantially similar rectangular frame piece, made of an electrically nonconductive and chemically resistant material, typically of molded plastic material, having on its upper (assembly) face grooves for receiving O-ring type gasket means, and having through holes and recesses in coordinated locations disposed along two opposite sides of the rectangular frame forming, upon completion of the assembling, ducts for the separate circulation of the negative electrolyte and of the positive electrolyte through all the negative electrolyte flow chambers and all positive electrolyte flow chambers, respectively, in cascade.

The negative electrolyte enters along a first side of a negative electrolyte flow chamber, flows through the chamber toward the opposite or second side thereof, exits the chamber, flows through the coordinated holes through the frame holding the electrode and through the frame holding the next membrane separator, reaching the level of the next negative electrolyte flow chamber and enters it from the same second side through which it exited from the previous negative electrolyte flow chamber and exits this next negative electrolyte flow chamber from the same first side it entered the previous negative electrolyte flow chamber, to flow through coordinated holes through the next pair of frames to the level of the next negative electrolyte flow chamber and so forth.

The same flow path is arranged also for the positive electrolyte, either in a "countercurrent" or in an "equicurrent" mode through the battery.

According to such an architecture, the electrochemical reactor does not have inlet and outlet manifolds for the two electrolytes, on the contrary, the electrolytes flow through the respective flow chambers in a zigzag path, that is essentially in hydraulic series or cascade mode instead of in hydraulic parallel mode.

In this way, by-pass current may only be "driven" by a voltage difference of about one-cell voltage and becomes practically negligible and above all it does not cause any corrosion on conductive parts.

The two types of pre-assembled elements are coordinately "keyed" so as to prevent any error in correctly stacking them alternately one over the other and with a correct orientation and perfect mutual alignment to compose the bipolar battery.

Apart from the suitably shaped keying pins and sockets and the position of the through holes and of the slotted portions of communication with the flow chambers, the molded plastic frames may be substantially identical for both types of elements.

Irrespective of the particular stack architecture, and most preferably, the electrode consists of a porous fabric or mat of carbon fibers in electrical continuity with a similar electrode structure on the opposite face of a conductive plate for providing substantially three-dimensional electrode structures having a large active area, that occupy almost entirely the relative electrolyte flow chamber.

This arrangement, dictated by the need to increase the rate of the half-cell reaction that can be supported at the electrode, contrasts with the need of minimizing the power absorbed by the motors that drive the electrolytes pumps in order to flow the solutions through the plurality of respective flow chambers at an adequate flow rate.

This problem is aggravated when passing from a traditional parallel flow of the electrolyte through all the respective flow chambers from a common inlet manifold to common outlet manifold to a cascade flow from one chamber to the next and so forth starting from one end to the opposite end of the multicell stack.

Although the cascade flow mode is extremely effective in eliminating any corrosion problems due to by-pass currents, it necessarily implies an augmented pressure drop in flowing the two electrolytes through the battery.

### SUMMARY OF THE INVENTION

According to this invention, useful in case of use of porous three-dimensional electrodes extending from the impervious electrically conductive plate towards the permionic membrane separator of the cell, the pressure drop of the flowing electrolytes through the respective pluralities of flow chambers when using porous mat electrodes encroaching into the flow chamber may be greatly reduced while narrowing or even eliminating any residual gap or unobstructed flow space between the porous electrode and the permionic membrane separator, which may even contact each other to minimize ohmic losses in the liquid body of solution electrolyte.

These apparently contradictory conditions are indeed accomplished according to the present invention by defining (cutting) in the porous electrode two orders of parallel flow channels, all the parallel spaced channels of each order extend from a common orthogonal base channel formed along the respective inlet or outlet side of the chamber and terminate short of reaching the base channel of the other order. Each order defines a comb-shaped flow distributing channelwork the parallel fingers of which interleave with the finger channels of the other order.

Practically, one comb-shaped channelwork has its base or manifolding channel running along a side of the chamber communicating with the inlet duct of the electrolyte into the chamber while the other specular comb-shaped channelwork has its parallel finger channels interleaved with the parallel finger channels of the first channelwork and has its base or manifolding channel running along the opposite side of the chamber communicating with the outlet electrolyte duct.

The interleaved finger flow channels or one order run parallel to each other, each terminating short of the manifolding base channel of the other order of interleaved parallel finger channels. Therefore, each inlet or "source" flow channel is separated from the two adjacent outlet or "drain" flow channels by a strip of a certain width of the three-dimensional porous electrode material, separating the parallel channels that may be eventually cut in it.

The interleaved orders of inlet and outlet electrolyte flow channels evenly distribute the electrolyte with a reduced pressure drop uniformly throughout the electrode area of the flow chamber, providing flow distribution channels throughout the mass of the three-dimensional porous electrode.

The pressure drop may be pre-arranged within a certain margin, by knowing the specific pressure drop of the electrolyte through the three-dimensional porous electrode material at a given flow rate and by designing the two orders of interleaved "source" and "drain" flow channels with an appropriate distance of separation from one another.

Besides outstandingly reducing the pressure drop suffered by the electrolyte flowing through the respective flow chambers in series from one end to the opposite end of the battery, this arrangement of interleaved "source" and "drain" channels, suitably cut through the thickness of the three-dimensional porous electrode, is found to outstandingly enhance the electrochemical performance of the battery because of a far more evenly distributed current density over the entire cell area of the battery.

The invention is more clearly defined in the annexed claims.

### BRIEF DESCRIPTION OF THE DRAWINGS

The different features and related advantages of the novel electrochemical battery architecture will become even more evident through the following description of a practical embodiment and by referring to the attached drawings, wherein:
**Figure 1** is an exploded view of a membrane element and of a bipolar electrode element of the battery;
**Figure 2** is a fragmentary detail view of an upturned membrane element detailing the way the membrane may be fitted into a rectangular window of the frame;
**Figure 3** is a fragmentary detail view of an upturned bipolar electrode element detailing the way an electrode may be fitted into the rectangular window of the frame;
**Figure 4** is a plan view of an electrode element using electrode structures in the form of a carbon felt or fabric, according to a preferred embodiment of the invention;
**Figure 5** is a fragmentary delay cross section of the bipolar plate electrode of Figures 1 and 3;
**Figure 6** is a cross sectional three-dimensional view of a completely assembled battery stack.

### DESCRIPTION OF AN EMBODIMENT OF THE INVENTION

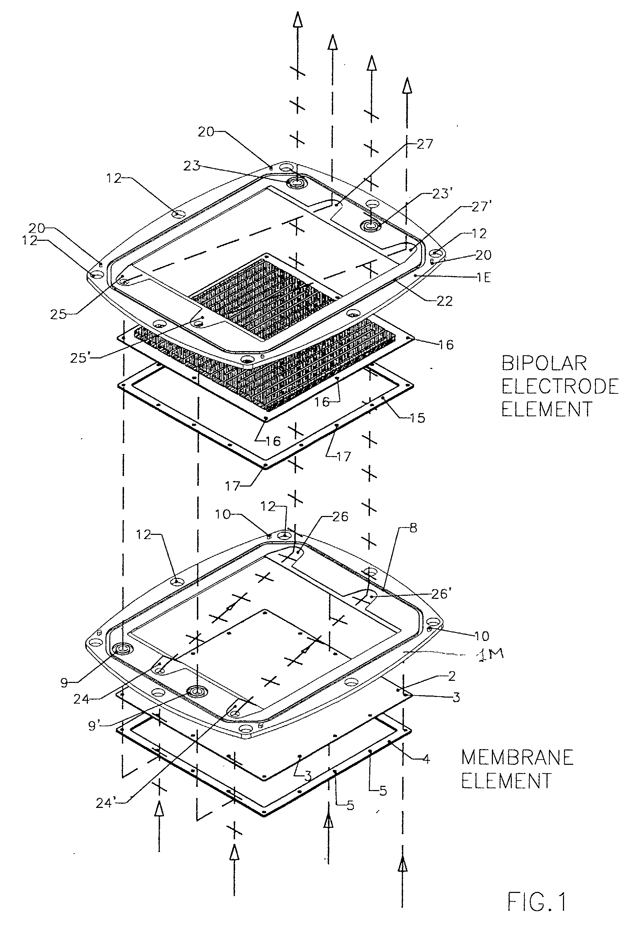

Figures 1, 2, 3, 4 and 5 illustrate a bipolar cell battery in which electrode structures made according to the present invention are employed.

The exploded view of Fig. 1, representing the two types of the pre-assembled elements, namely a membrane element and a bipolar electrode plate element, provides an explicative overview of the peculiar architecture of the battery that has been used to prove the validity of this invention.

The frame portion 1M of membrane element and the frame portion 1E of a bipolar electrode element are under many aspects substantially similar. Both may be of a molded plastic material such as for example polypropylene, different molds being employed for the two types of frames 1E and 1M, for implementing suitably different keying pins and sockets.

The molded plastic frames 1M and 1E define a rectangular inner window, however, the outer perimeter of the frame is not rectangular but has a peculiarly curved shape, determined by the fact that each side of the frame has a convex outer edge, making the width of the cross section of the frame larger near the central portion of each side than near to corners. This particular shape of the frame optimizes weight versus structural strength, in consideration of the electrolyte pressure withstanding requisites. Indeed, the completed battery assembly is hydraulically tested to withstand a maximum electrolyte pressure of up to 5 atmospheres. The convex shape of the sides of the frame body has been found to best respond to the flexural strength requisite by reducing stress concentrations and achieving a most efficient weight/pressure resistance ratio.

In the exploded view of Fig. 1, the flow paths of the positive electrolyte and of the negative electrolyte through the respective positive electrode and negative electrode flow chambers are schematically traced by flow lines depicting the respective positive (+) and negative (-) signs.

The electrolyte flow paths are shown, according to stacking orientation of the elements of the battery starting from a horizontally disposed bottom terminal element consisting of a positive end electrode.

In the figure, the lower element is a membrane element showing a rectangularly cut membrane 2 which may be either a cation exchange membrane such as sulphonated polyethylene membrane or a polystyrene sulphoric acid membrane or similar chemically resistant membrane or an anion exchange membrane.

The membrane 2, cut to size, has also a number of holes 3 punched along its perimetral portion at pre-ordinated positions. Similarly, a fixing counterflange 4, generally of the same material of the frame piece 1M, has holes at pre-ordered positions, geometrically coinciding with the positions of the holes 3 of the membrane 2.

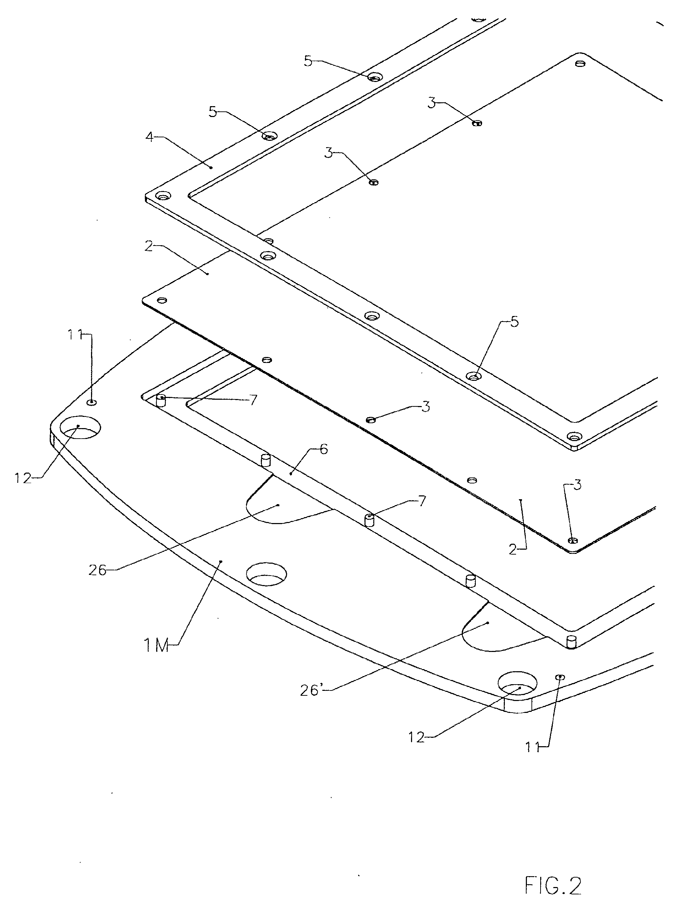

By looking at Fig. 2, a detail enlarged view of the membrane element of Fig. 1, overturned by 180°, it is shown how the membrane 2 and the fixing counterflange 4 are accommodated over the recessed inner flange portion 6 of the frame 1M, the coordinated holes 3 and 5 of the membrane and of the retaining counterflange 4 respectively fitting on the array of molded retention pins 7 present on the face of the flange portion 6.

Spacer rubber gaskets may be disposed on the flange portion 6 before installing the membrane 2 and a second rubber gasket may be interposed between the membrane 2 and the fixing counterflange 4 to adjust to the required depth of the respective flow chambers on the opposite sides of the membrane 2 and/or to prevent leakages of the negative electrolyte into the positive electrolyte or viceversa by possible pressure differences in the two flow chambers on the opposite sides of the separating membrane 2.

Alternatively, a suitable sealant such as for example a silicone gel sealant may be used in pre-assembling the element to ensure a leakproof assembly.

By appropriate implements, the retaining counterflange 4 is eventually pressed over the membrane and the ends of the retention pins 7 protruding out of the holes 5 of the counterflange 4 are heat-riveted by the use of a heated tool, causing the "molding" of the molten tip of the pins 7 into the swaged holes 5 of the fixing flange 4.

Upon "riveting" the retention pins 7, the element is completely pre-assembled and may be stacked over a last-mounted bipolar electrode element in an overturned condition, without any risk for the pre-installed membrane to fall off.

Moreover, the upper face of the molded frame piece 1M of the membrane element may readily receive, if not already installed, a perimetral seal O-ring gasket 8 and the two negative (or positive) electrolyte ducts O-rings, 9 and 9'.

The upper face of the frame piece 1M of the membrane element has at least two, preferably four, keying pins 10, which, in the example, have an oblong cross section, while on the lower face, partially visible in the detail view of Fig. 2, two or preferably four pin sockets 11 are present, which in the example shown, have a circular cross section.

In the example shown in the figures, the tie rods that complete the battery assembly pass through the holes 12, formed ordered in the perimetral portion of all the frames and of the two end elements, external to the perimetral seal O-ring gasket 8.

The upper group of the exploded view of Fig. 1, depicts a bipolar electrode element.

According to the sample embodiment of this invention, the bipolar plate electrode is an electrically conductive composite that includes a conductive plate 13, typically a glassy carbon plate with a thickness in the order of 1 to 3 or more millimeters, having bonded over its opposite faces a carbon felt electrode structure 14 of a thickness (depth) that may generally be comprised between 1 and 5 or more millimeters.

The felt electrodes 14 are bonded in electrical continuity to the conductive septum 13 and have a relatively open structure such to be readily permeated by the electrolyte flown through the electrode chamber.

In this sample embodiment, the electrode composite, 13-14, is mounted in a respective frame piece 1E of a molded thermoplastic, typically of the same type with which are produced the frame pieces 1E of the membrane elements.

The pre-assembling of the electrode element is totally similar to the pre-assembling of a membrane element.

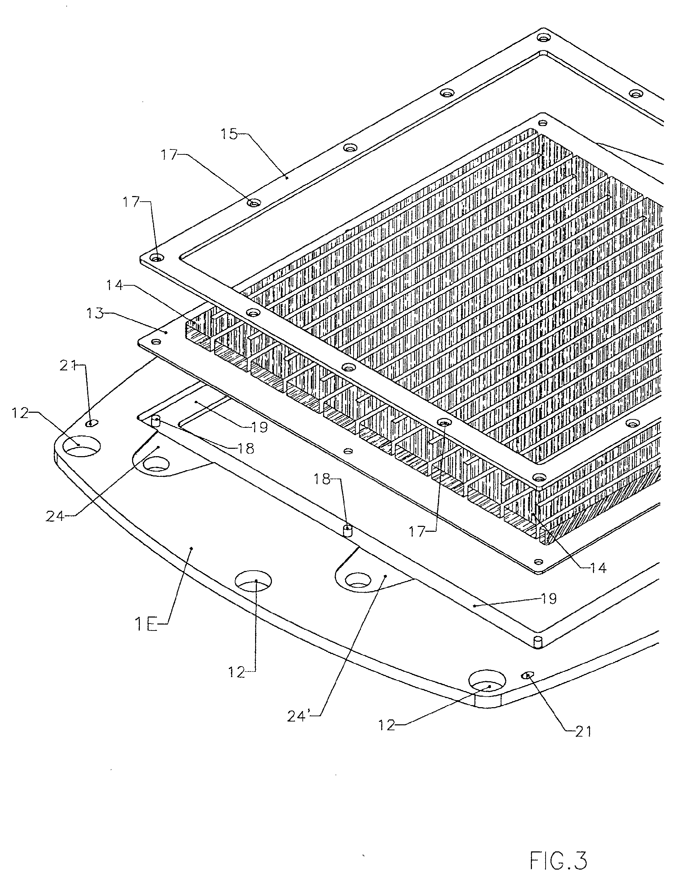

A different disposition of the coordinated plurality of holes 16 in the perimetral portion of the electrically conductive carbon plate septum 13 and of the holes 17 in the retention counterflange 15, and of course also of the retention pins 18 (Fig. 3) on the recessed inner flange portion 19 of the frame 1E, will prevent any possibility of error in pre-assembling the two types of stackable elements.

Fig. 3 is an enlarged detail view of the electrode element of Fig. 1, overturned by 180°.

Differently from the frame piece 1M of the membrane element, the frame piece 1E of the electrode element has, on the upper face keying pins 20 (Fig. 1) having a circular cross section of a diameter appropriate to fit into the circular sockets 11 present on the underside of the frame piece 1M of a membrane element. As visible in the upturned view of Fig. 3, on the upper side of the molded frame piece 1E of the electrode element (Fig. 1), there are sockets 21 with an oblong cross section suitable to accommodate the keying pins 10 present on the upper side of the molded frame piece 1M of the membrane element.

Similarly to the frame piece 1M of the membrane elements, also the frame piece 1E of the electrode element has on its upper face grooves for accommodating a perimetral sealing O-ring 22 and two positive (or negative) electrolyte ducts O-rings 23 and 23'.

### THE INVENTION

According to this invention, the porous carbon mat electrodes 14 have two distinct orders or channelworks of parallel and mutually interleaved electrolyte distributing channels oriented along the same direction of the electrolyte flow through the respective electrolyte flow chamber, starting from the inlet recessed slots 24 and 24' and 25 and 25' for the positive and negative electrolytes, respectively, to the outlet recessed slots 26 and 26' and 27 and 27', functionally present on opposite sides of the chamber, according to the battery architecture of this embodiment.

Of course, though in the example two ducts and relative slots are shown, depending on the side of the cells there may be only one duct and slot or any number of ducts and slots for a better distribution and/or for reducing hydraulic pressure drops.

As depicted in Figures 1, 3, 4 and 5, a first "comb-shaped" channelwork has the finger channels s1, s2, s3, ..., sn, extending parallel to each other from a base or manifolding channel S defined along the side of the electrolyte flow chamber through which the electrolyte enters the chamber through the inlet slots, connecting with the respective electrolyte ducts, and end short from reaching the corresponding manifolding or base channel D defined along the opposite side of the flow chamber where the electrolytes exits the chamber through the outlet slots communicating with the respective electrolyte ducts.

Similarly, the second comb-shaped channelwork has finger channels d1, d2, d3, ... dn, extending parallel to each other from their base or manifolding channel D and they are interleaved with the finger channels s1, s2, s3, ..., of the first comb-shaped channelwork. The finger channels d1, d2, d3, ... of the second comb-shaped channelwork, terminate short of reaching of the base or manifolding channel S of the first channelwork.

The two interleaved orders of channels, s1, s2, s3, ..., and d1, d2, d3, ..., constitute an electrolyte distributing (source) channelwork and an electrolyte draining (drain) channelwork.

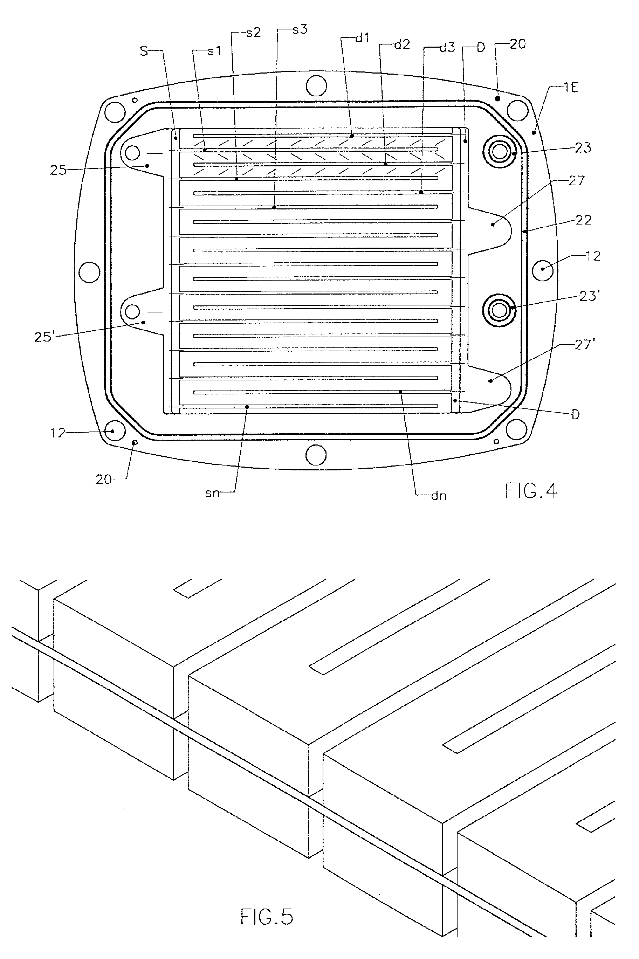

As may be observed in the plan view of Fig. 4 and in Figures 1 and 3, the respective base or manifolding channels S and D for the incoming electrolyte and for the electrolyte exiting the flow chamber, respectively, are defined by having the felt electrode 14 ending at a certain distance from the side wall of the flow chamber so that the electrolyte entering the flow chamber through the inlet slots 24 and 24' (Fig. 3) or 25 and 25' (Figures 1 and 4) is able to distribute itself in this base or manifolding inlet channel S and from there to evenly distribute itself along the source finger channels s1, s2, s3, ....

The drain finger channels d1, d2, d3, ..., interleaved with the source finger channels, provide as many drain channels for the electrolyte directed to the exit slots 27 and 27' (Fig. 4).

The electrolyte is in this way evenly distributed throughout the mass of porous carbon fiber felt electrode 14 with a resulting low pressure drop.

As schematically indicated by the idealized flow arrows in Fig. 4, the electrolyte is practically subjected to flow laterally through a limited segment of carbon felt, effectively refreshing the electrolyte throughout the active electrode surface, on account of the fact that the cooperating interleaved source and drain channelworks provide for a flow path with a negligible pressure drop across the electrolyte flow chamber.

It has been found that with such a channelwork electrode configuration, the carbon felt electrode may occupy the entire depth of the electrolyte flow chamber of the cell, allowing for the membrane separator to abut directly against the surface of the channeled carbon felt electrode, minimizing ohmic drop in the electrolyte.

The two channelworks may be defined in the carbon felt electrode by cutting it after having been bonded to the bipolar electrode plate 13 or before. Indeed, a carbon felt may be pre-defined by cutting it with a die punch and adhered to a backing sheet to facilitate its handling throughout the bonding process. The backing sheet may ultimately be peeled off the surface of the bonded electrode or removed in any other suitable manner.

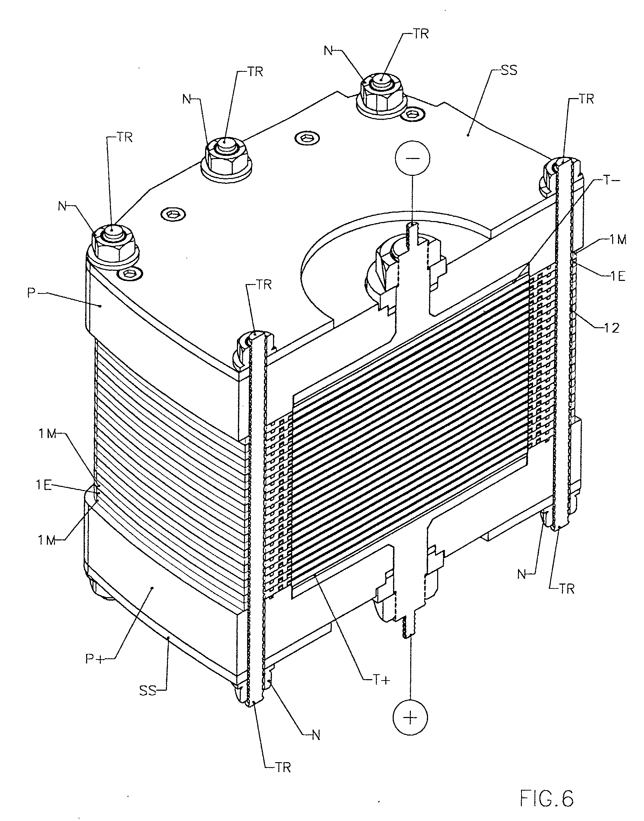

Fig. 5 is an enlarged detailed view of the peculiar structure of the composite electrode embodying the principles of this invention.

Fig. 6 is a cross sectional three-dimensional view of an assembled battery stack of the type described above.

According to this sample embodiment, the bottom end electrode, that in the example shown is constituted by a positive carbon electrode, T+ and the upper terminal electrode T- are set in sturdy end plates of a molded plastic P+ and P-, respectively, which are reinforced by a stress plate of stainless steel SS, onto which act the compression nuts N upon tensioning the tie rods TR.

The use of plastic end plates P+ and P- facilitate the constitution of a perfectly sealed and corrosion proof terminal for electrical connection of the battery in the external circuit.

## Claims

1. Porous mat electrode (14) permeable to an electrolyte solution for an electrochemical reactor for conducting half-cell reduction and oxidation reactions in respective positive (+) and negative (-) liquid electrolytes flown in contact with said electrode in respective flow chambers defined on the opposite sides of an ion exchange membrane cell separator (2), **characterized in that**
said porous electrode structure (14) is bonded in electrical continuity to an electrically conductive plate (13) and has two distinct comb-shaped channelworks (S, s1, s2, ..., sn; D, d1, d2, ..., dn), the finger channels (s1, s2, ..., sn) of one channelwork being substantially parallel to each other and interleaved with the substantially parallel finger channels (d1, d2, ..., dn) of the other channelwork; a first or source comb-shaped channelwork having a base or manifolding channel (S) running along the side of the chamber through which the electrolyte is fed into the chamber and a second or drain channelwork having its base or manifolding channel (D) running along the opposite side from which the electrolyte exits the chamber;
all finger channels of one channelwork (s1, s2, ..., sn; d1, d2, ..., dn) extending from the respective base or manifolding channel (S, D) and terminating short of reaching the manifolding channel (D, S) of the other channelwork.
